# EUROPEAN PATENT APPLICATION

(11) **EP 3 819 802 A1**
(43) Date of publication of application: **12.05.2021**
(21) Application number: 19919541.3
(22) Date of filing: 18.12.2019
(51) Int. Cl.: G06F 21/60

(54) **DATA CONSISTENCY CHECKING METHOD AND DATA UPLOADING/DOWNLOADING APPARATUS**

(30) Priority: 27.09.2019 CN 201910925637
(71) Applicant: Xiamen Wangsu Co., Ltd., Xiamen, Fujian 361003 (CN)
(72) Inventor: CHEN, Qinglong, Xiamen, Fujian 261021 (CN)
(74) Representative: Vinsome, Rex Martin
(86) International application number: PCT/CN2019/126438
(87) International publication number: WO 2021/056865

(57) **Abstract**

Embodiments of the present disclosure relate to the field of data processing technologies, and particularly, to a data consistency verification method, and data uploading and downloading device, to solve the problem that an algorithm cannot be provisionally selected in the consistency verification, resulting in poor flexibility. The present disclosure including steps of: a server receives N segment data of a first data sent by a terminal (201), the N segment data being obtained by the terminal segment the first data according to a segment specification, and N≥2; the server determines an encryption policy corresponding to the first data (202); the server calculates the segment data of the first data according to the encryption policy to obtain a total verification value (203); the server stores associatively the first data formed by combining the N segment data, the segment specification, the encryption policy, and the total verification value (204); the server sends the first data, the segment specification, the encryption policy, and the total verification value after receiving a downloading request for the first data (205).

## Description

### CROSS REFERENCE TO RELATED APPLICATIONS

The present application claims the benefit of priority of Chinese Patent Application No. 201910925637.4 filed on 27 September, 2019, and entitled "Data consistency verification method, and data uploading and downloading device". Each of the above-referenced applications is incorporated by reference herein in its entirety.

### TECHNICAL FIELD

The present disclosure relates to the field of data processing technologies, and particularly, to a data consistency verification method, and data uploading and downloading device.

### BACKGROUND

With the advent of the 5G era and the popularity of high-bit-rate videos, audio and video files are becoming larger and larger. On the other hand, with the development of the information age, computer software packages are getting larger and larger. As the size of the software keeps increasing, it is necessary to perform breakpoint resumptions when uploading or downloading files.

Breakpoint resumptions refer to artificially dividing a downloading or uploading task (a file or a compressed package) into several parts when performing downloading or uploading, with each part using a thread for uploading or downloading. If there is a network failure, it is allowed to continue to upload and download an unfinished part from a part that has already been uploaded or downloaded, instead of uploading or download from the beginning, thereby saving time and increasing speed.

In the process of breakpoint resumptions, in order to prevent a file from being tampered or injected with a Trojan virus, or implanted an advertisement, the file is generally verified according to its consistency verification value to ensure its consistency. Before an existing consistency verification, a segment size and an encryption algorithm need to predeterminer. Then the consistency verification can only be performed according to the segment size arranged and the encryption algorithm, and the encryption algorithm cannot be changed, resulting in poor flexibility.

### SUMMARY

The present disclosure provides a data consistency verification method, and data uploading and downloading device to solve the problem that an encryption algorithm cannot be provisionally selected in the consistency verification, resulting in poor flexibility.

Some embodiments of the present disclosure provide a data consistency verification method, including: a server receives N segment data of a first data sent by a terminal, the N segment data is obtained by the terminal segmenting the first data according to a segment specification, and N≥2; the server determines an encryption policy corresponding to the first data; the server calculates the segment data of the first data according to the encryption policy to obtain a total verification value; the server stores associatively the first data formed after the N segment data is combined, the segment specification, the encryption policy, and the total verification value; and the server responds the first data, the segment specification, the encryption policy, and the total verification value after receiving a downloading request for the first data.

In an embodiment of the present disclosure, the server calculates the segment data of the first data according to the encryption policy to obtain the total verification value, including: the server selects M segment data from the N segment data according to an encryption rule in the encryption policy, and 2≤M≤N; with respect to any segment data in the M segment data, the server calculates the segment data by using an encryption algorithm in the encryption policy to obtain a segment verification value of the segment data; and the server arranges M segment verification values into a first string according to the encryption rule, then calculates the first string by using the encryption algorithm to obtain the total verification value.

In an embodiment of the present disclosure, M=N; the encryption rule is to arrange N segment verification values into the first string according to a position of the N segment data in the first data.

In an embodiment of the present disclosure, the server determines the encryption policy corresponding to the first data, including: the server receives the encryption policy sent by the terminal, here the encryption policy is such an encryption policy as selected by the terminal from a plurality of pre-stored encryption policies and as corresponding to the first data.

In an embodiment of the present disclosure, the server determines the encryption policy corresponding to the first data, including: the server determines the encryption policy corresponding to the first data based on a preset rule and according to the number of segment data and/or a size of each segment data.

Some embodiments of the present disclosure provide a data consistency verification method, including: a terminal sends a downloading request for a first data to a server; the terminal receives the first data sent by the server, a segment specification corresponding to the first data, an encryption policy corresponding to the first data, and a total verification value corresponding to the first data; the terminal reads the first data in segments according to the segment specification to obtain N segment data; the terminal calculates a segment data of the first data according to the encryption policy to obtain a total encryption value; and the terminal verifies the total encryption value by using the total verification value to determine whether the first data is tampered with.

In an embodiment of the present disclosure, the terminal calculates the segment data of the first data according to the encryption policy to obtain the total encryption value, including: the terminal selects M segment data from the N segment data according to an encryption rule in the encryption policy, and 2≤M≤N; with respect to any segment data in the M segment data, the terminal calculates the segment data by using an encryption algorithm in the encryption policy to obtain a segment encryption value of the segment data; and the terminal arranges M segment encryption values into a second string according to the encryption rule, then calculates the second string by using the encryption algorithm to obtain the total encryption value.

In an embodiment of the present disclosure, M=N; the encryption rule is to arrange N segment encryption values into the second string according to a position of the N segment data in the first data.

An embodiment of the present disclosure further includes: the terminal performs segment on a second data according to the segment specification to obtain M segment data; the terminal sends the M segment data to the server.

Some embodiments of the present disclosure provide an uploading and downloading server, including: a first transceiver unit, configured to receive N segment data of a first data sent by a terminal; here the N segment data are obtained by the terminal segmenting the first data according to a segment specification, and N≥2; a determining unit, configured to determine an encryption policy corresponding to the first data; a first calculating unit, configured to calculate the segment data of the first data according to the encryption policy to obtain a total verification value; and a storage unit, configured to associatively store the first data formed after the N segment data are combined, the segment specification, the encryption policy, and the total verification value; herein the first transceiver unit is further configured to send the first data, the segment specification, the encryption policy, and the total verification value after receiving a downloading request for the first data.

In an embodiment of the present disclosure, the first calculating unit is specifically configured to: select M segment data from the N segment data according to an encryption rule in the encryption policy, and 2≤M≤N; with respect to any segment data in the M segment data, calculate the segment data by using an encryption algorithm in the encryption policy to obtain a segment verification value of the segment data; arrange M segment verification values into a first string according to the encryption rule, and calculate the first string by using the encryption algorithm to obtain the total verification value.

In an embodiment of the present disclosure, M = N; the encryption rule is to arrange N segment verification values into the first string according to a position of the N segment data in the first data.

In an embodiment of the present disclosure, the determining unit is specifically configured to: receive the encryption policy sent by the first terminal, here the encryption policy is such an encryption policy as selected by the first terminal from a plurality of pre-stored encryption policies and as corresponding to the first data.

In an embodiment of the present disclosure, the determining unit is specifically configured to determine the encryption policy corresponding to the first data based on a preset rule and according to the number of segment data and/or a size of each segment data.

Some embodiments of the present disclosure provide a data uploading and downloading terminal, including: a second transceiver unit, configured to send a downloading request for a first data to a server; and the second transceiver unit, further configured to receive the first data sent by the server,a segment specification corresponding to the first data, an encryption policy corresponding to the first data, and a total verification value corresponding to the first data; a reading unit, configured to read the first data in segments according to the segment specification to obtain N segment data; a second calculating unit, configured to calculate the segment data of the first data according to the encryption policy to obtain a total encryption value; and a verification unit, configured to verify the total encryption value by using the total verification value to determine whether the first data is tampered with.

In an embodiment of the present disclosure, the second calculating unit is specifically configured to: select M segment data from the N segment data according to an encryption rule in the encryption policy, and 2≤M≤N; with respect to any segment data in the M segment data, calculate the segment data by using an encryption algorithm in the encryption policy to obtain a segment encryption value of the segment data; arrange M segment encryption values into a second string according to the encryption rule, and calculate the second string by using the encryption algorithm to obtain the total encryption value.

In an embodiment of the present disclosure, M=N; the encryption rule is to arrange N segment encryption values into the second string according to a position of the N segment data in the first data.

In an embodiment of the present disclosure, the second transceiver unit is further configured to: perform segment on a second data according to the segment specification to obtain M segment data; and send the M segment data to the server.

Some embodiments of the present disclosure also provide an electronic device, including: at least one processor; and a memory communicatively connected with the at least one processor; here the memory stores an instruction executable by the at least one processor, and the instruction is executed by the at least one processor, so that the at least one processor is able to implement the method as described above.

Some embodiments of the present disclosure further provide a non-transitory computer-readable storage medium, configured to store a computer instruction that is used to bring the computer to implement the method as described above.

In the embodiments of the present disclosure, when uploading the first data to a server, a terminal divides the first data into N segment data, and then uploads the N segment data. The server receives the N segment data which are obtained by the terminal segmenting the first data according to a segment specification. The server determines an encryption policy corresponding to the first data, and calculates the segment data according to the encryption policy to obtain the total verification value. The server combines the N segment data into a first data for storage, and associatively stores a corresponding segment specification, the encryption policy, and the total verification value with the first data. After receiving a downloading request for the first data, the server sends the first data, the segment specification, the encryption policy, and the total verification value. Therefore, the terminal that downloads data may calculate a total encryption value of the first data according to the segment specification and the encryption policy, and then use the total verification value to verify the total encryption value to determine whether the first data is tampered with. In the embodiments of the present disclosure, the segment specification and the encryption policy of the consistency verification may be temporarily selected and determined by the terminal or the server, and be sent by the server together with the first data, so that it is not necessary to make and contract a protocol in advance between the terminal and server that uploads and downloads data, so that the encryption policy and the segment specification may be temporarily determined according to a real-time condition, thereby improving flexibility of consistency verification and solving the problem that the encryption policy and segment specification cannot be changed after a protocol is contracted.

### BRIEF DESCRIPTION OF THE DRAWINGS

In order to illustrate the technical solutions in the embodiments of the present disclosure more clearly, the drawings used in the description of the embodiments will be briefly introduced below. It is obvious that the drawings in the following description are only some embodiments of the present disclosure. For those skilled in the art, other drawings may also be obtained according these drawings without any inventive effort.
FIG. 1 is a structural schematic diagram of a system framework provided in the embodiments of the present disclosure.
FIG. 2 is a schematic flowchart of a data consistency verification method according an embodiment of the present disclosure.
FIG. 3 is a structural schematic diagram of a server for data uploading and downloading according to an embodiment of the present disclosure.
FIG. 4 is a structural schematic diagram of another terminal for data uploading and downloading according to an embodiment of the present disclosure.
FIG. 5 is a structural schematic diagram of an electronic device according to an embodiment of the present disclosure.

### DETAILED DESCRIPTION

In order to make the objective, technical solution and advantages of the present disclosure clearer, the present disclosure is further described in detail below with reference to the accompanying drawings. Obviously, the described embodiments are only some rather than all embodiments of the present disclosure. Based on the embodiments in the present disclosure, all other embodiments obtained by those skilled in the art without creative efforts shall fall within the protection scope of the present disclosure.

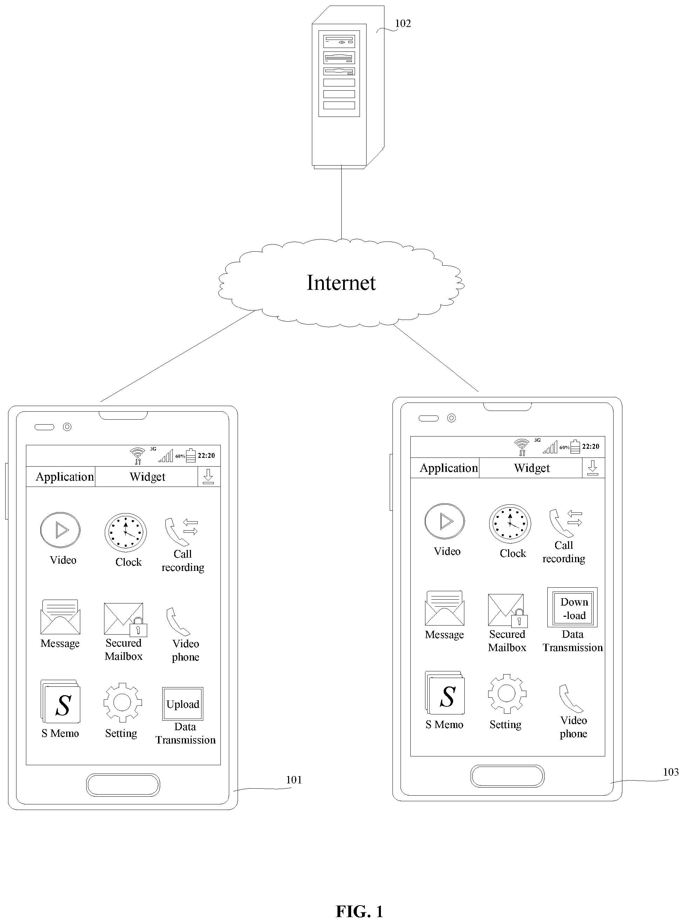

Referring to FIG. 1, it shows a system framework diagram of a data consistency verification system according to an embodiment of the present disclosure. The data consistency verification system includes a first terminal 101, a server 102, and a second terminal 103. The first terminal 101 and/or the second terminal 103 may be electronic devices with wireless communication functions, such as mobile phones, tablet computers, or dedicated handheld devices, or devices connected to the Internet by wired access such as personal computers (PC), laptops or servers. The server 102 may be a network device such as a computer. The server 102 may be an independent device, or may be a server cluster formed by multiple servers. For example, the server 102 may use the cloud computing technology for information processing.

The first terminal 101 is installed with a client or browser supported by the server 102, and the first terminal 101 communicates with the server 102 based on the installed client or browser; the second terminal 103 is also installed with a client or browser supported by the server 102, and the second terminal 103 communicates with the server 102 based on the installed client or browser. For example, both the first terminal 101 and the second terminal 103 are installed with a client which is an application (APP); the first terminal 101 and the second terminal 103 may be the same or different APPs. For example, the client on the first terminal 101 and the second terminal 103 may perform both data uploading and data downloading. Alternatively, the first terminal 101 is an APP dedicated for data uploading, and the second terminal 103 is an APP dedicated for data downloading. The server 102 is a server corresponding to the first terminal 101 and the second terminal 103. A data uploading person logs in to the client on the first terminal 101 with his/her own account information, or logs on the website with his/her own account through the browser on the first terminal 101. A data downloading person logs into the client on the second terminal 103 with his/her own account information, or logs on the website with his account through the browser on the second terminal 103.

The first terminal 101 and the server 102, and/or the server 102 and the second terminal 103 are connected through a wired or wireless network. Alternatively, the wireless or wired network uses a standard communication technology and/or protocol. The network is generally the Internet, but may further be any network, including but not limited to, a Local Area Network (LAN), a Metropolitan Area Network (MAN), a Wide Area Network (WAN), a mobile, wired, or wireless network, a private network, a virtual private networks, or any combination thereof. In some embodiments of the present disclosure, technologies and/or formats including Hyper Text Mark-up Language (HTML), Extensible Markup Language (XML), and the like are used to represent data exchanged over a network. Conventional encryption technologies, such as Secure Socket Layer (SSL), Transport Layer Security (TLS), Virtual Private Network (VPN), and Internet Protocol Security (IPsec) can be used to encrypt all or some links. In some other embodiments of the present disclosure, customized and/or dedicated data communication technologies may also be used in place of or in addition to the data communication technologies.

It shall be noted that, in the embodiments of the present disclosure, the first terminal corresponds to a data uploading terminal, and the second terminal corresponds to a data downloading terminal. The first terminal, the second terminal, and the like in the embodiments of the present disclosure are only used for functional description and as examples, rather than for limitation. The first terminal and the second terminal are only used to distinguish roles played by different terminals; the first terminal generally refers to a terminal that may perform data uploading, and the second terminal generally refers to a terminal that may perform data downloading, but no one terminal is specifically referred to as a "first terminal" or a "second terminal". Any terminal may be a first terminal or a second terminal, and there are various possibilities that one terminal is both a first terminal and a second terminal, that is, one terminal may perform both data uploading and data downloading.

In the existing technology, due to the increasing size of file data, breakpoint resume is used for file uploading. That is, a file is segmented and uploaded in parallel. After all segments are uploaded, they are then combined into a file. In order to ensure consistency of the data, the file uploaded in segments needs to be verified for consistency. Existing consistency verification values include a MD5 value, a SHA1 check code, CRC32, or SHA256 and so on. These algorithms require to use all data from the beginning to the end of a file to calculate the consistency verification value. The MD5 (Message-Digest Algorithm) is taken as an example for illustration in the following.

The MD5 algorithm may calculate an input string of any length to obtain a fixed-length output, and this algorithm is irreversible. Even if an encrypted ciphertext is obtained, it is impossible to inversely calculate a plaintext through a decryption algorithm. The MD5 algorithm may be used for the consistency verification. The MD5 algorithm may be used to generate a unique consistency verification value, i.e., an MD5 value, for a file (regardless of size, format, or quantity thereof). It may be known whether a source file is changed by checking whether the MD5 value of the file before and after downloading has changed, thereby ensuring that the downloaded file is the same as the source file.

Since segments of the file are uploaded concurrently, a completion time for uploading of each segment cannot be fixed, the consistency verification may not be performed in an order of time points when the segments are received. Instead, the consistency verification may be performed by re-reading the entire file after all the segments are uploaded and combined into a file. A problem with this is that one file is read multiple times and may cause a waste of system resources.

In order to avoid the problem of waste of resources, a current approach is to calculate the consistency verification value of each segment firstly when the segments are being uploaded concurrently. For example, the segments are recorded as block 1, block 2 ... block N, and an MD5 value of each segment is calculated and recorded as etag 1, etag 2, etag 3 ... etag N, that is, block 1 generates etag 1, block 2 generates etag 2, block 3 generates etag 3 ... and block N generates etag N. After file combination, the calculated MD5 values of the respective segments are connected together based on sequence of the respective segments to generate a string recorded as String, that is, the string "String" is equal to etag 1 etag 2 etag 3 ... etag N. Consistency verification calculation is performed on the string to generate a final consistency verification value, that is, the MD5 value of etag 1 etag 2 etag 3 ... etag N is calculated as the final consistency verification value.

As described above, if a file is uploaded and downloaded in segments with different sizes, the consistency verification values generated vary. Therefore, it is necessary to prearrange sizes of the segments to be used and a consistency verification algorithm.

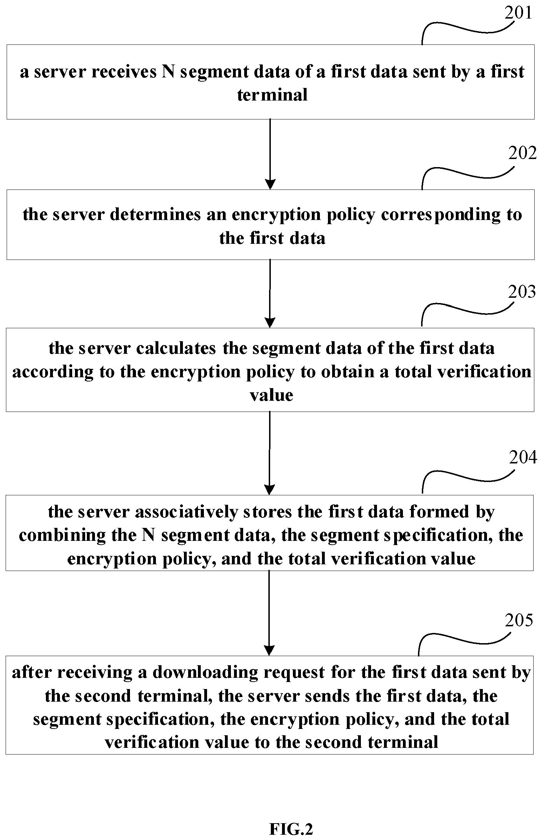

In order to solve the problem, based on the framework of FIG. 1, an embodiment of the present disclosure provides a data consistency verification method. As shown in FIG. 2, the data consistency verification method according to the embodiment of the present disclosure includes the following steps.

In step 201, a server receives N segment data of a first data sent by a first terminal.

Herein, the N segment data are obtained by the first terminal segmenting the first data according to a segment specification, and N ≧ 2.

In step 202, the server determines an encryption policy corresponding to the first data.

Herein the encryption policy is the data consistency verification method, which may be sent directly by the first terminal to the server; or may be sent by the first terminal to the server in response to a user's selection after multiple items of encryption policies stored in the server are displayed to the user through the first terminal; or the server is pre-configured with selection rules, for example, a received data being greater than a certain threshold corresponds to an encryption policy, and the data being less than the threshold corresponds to another encryption policy and so on.

In an embodiment of the present disclosure, the step 202 that the server determines the encryption policy corresponding to the first data includes: the server receives the encryption policy sent by the first terminal, and the encryption policy is such an encryption policy as selected by the first terminal from a plurality of pre-stored encryption policies to correspond to the first data.

Specifically, the server stores a plurality of encryption policies. When the user needs to upload a file, a file uploading request is sent to the server through the first terminal, and the server sends a response message to the first terminal based on a received file uploading request. The response message may include a plurality of encryption policies which are displayed to the user by the first terminal for selection by the user. Then the first terminal sends a determined encryption policy to the server in response to the user's selection, so that the server determines the encryption policy corresponding to the first data according to the message sent by the first terminal.

In another embodiment of the present disclosure, in the step 202, the server determines the encryption policy corresponding to the first data, including: the server determines the encryption policy corresponding to the first data based on a preset rule and according to the number of segment data and/or a size of each segment data.

Specifically, the server stores a preset rule which is a correspondence relationship between the encryption policy and the number of segment data and/or the size of each segment data. For example, when the number of the segment data is less than 100 and the size of each segment data is less than 4M, the preset rule corresponds to an encryption policy 1; when the number of the segment data is greater than 100 and the size of each segment data is greater than 4M, the preset rule corresponds to an encryption policy 2; and the preset rule corresponds to an encryption policy 3 in other cases. After the server receives the segment data, it may search for a corresponding relationship according to the number of the segment data and the size of each segment data to determine an encryption policy, thereby resources may be allocated flexibly and reasonably according to specific data sizes and calculation amount.

In step 203, the server calculates the segment data of the first data according to the encryption policy to obtain a total verification value.

In step 204, the server associatively stores the first data formed by combining the N segment data, the segment specification, the encryption policy, and the total verification value.

Specifically, the server combines the N segment data to obtain a total file, that is, the first data, and associatively stores the first data with the specific segment specification, the encryption policy, and the total verification value. Therefore, when the server receives a downloading request for the first data, it may send the segment specification, the encryption policy, and the total verification value together with the first data. After the first terminal receives the first data, the total verification value is used to compare with the total encryption value in the process of consistency verification of the first data to verify whether the first data is tampered with; the segment specification and the encryption policy are used to perform a consistency verification calculation on the first data, to obtain a total encryption value of the first data.

In step 205, after receiving a downloading request for the first data sent by the second terminal, the server sends the first data, the segment specification, the encryption policy, and the total verification value to the second terminal.

In the embodiments of the present disclosure, when the first terminal uploads the first data to the server, the first data is divided into N segment data. The N segment data are uploaded. The server receives the N segment data which are obtained by the first terminal segment segmenting the first data according to the segment specification. The server determines the encryption policy corresponding to the first data, and calculates the segment data according to the encryption policy to obtain the total verification value. The server combines the N segment data into the first data for storage, and associatively stores the corresponding segment specification, the encryption policy, and the total verification value with the first data. When the server receives the downloading request for the first data sent by the second terminal, the server sends the first data, the segment specification, the encryption policy, and the total verification value to the second terminal. Therefore, the second terminal may calculate a total encryption value of the first data according to the segment specification and the encryption policy, and then verify the total encryption value by using the total verification value to determine whether the first data is tampered with. In the embodiments of the present disclosure, the segment specification and the encryption policy of the consistency verification may be temporarily selected and determined by the first terminal or the server, and be sent by the server together with the first data to the second terminal, so that it is not necessary to make and contract a protocol between the first terminal, the server and the second terminal, so that the encryption policy and the segment specification may be temporarily determined based on a real-time condition, thereby improving flexibility of consistency verification and solving the problem that the encryption policy and segment specification cannot be changed after a protocol is contracted.

In order to facilitate the consistency verification between the server and the terminal, a prescription on the segment specification, the encryption policy and an identification of the total verification value may be agreed in advance between the server and the terminal. For example, an identification corresponding to the encryption algorithm may be prescribed in advance as follows: [{01-MD5}, {02-SHA256}, {03-MD4}, {04-SHA1}, {05-CRC32}]. Herein, the MD5 algorithm corresponds to an identifier 01, the SHA256 algorithm corresponds to an identifier 02, the MD4 algorithm corresponds to an identifier 03, the SHA1 algorithm corresponds to an identifier 04, and the CRC32 algorithm corresponds to an identifier 05. If the user selects the SHA1 algorithm when uploading a file, the first terminal sends the identifier 04 to the server, and after receiving the downloading request sent by the second terminal, the server also sends the identifier 04 to the second terminal.

Further, in order to promote flexibility of the consistency verification, in the embodiments of the present disclosure, the encryption policy for performing the consistency verification may be flexibly set according to a network scenario. For example, the step 203 that the server calculates the segment data of the first data according to the encryption policy to obtain the total verification value includes: the server selects M segment data from the N segment data according to an encryption rule in the encryption policy, and 2≤M≤N; the server calculates any segment data in the M segment data by using an encryption algorithm in the encryption policy with respect to the segment data to obtain a segment verification value of the segment data; the server arranges M segment verification values into a first string according to the encryption rule, and calculates the first string by using the encryption algorithm to obtain the total verification value.

Specifically, the encryption policy may include an encryption rule and an encryption algorithm, both of which may be selected by the user. The encryption algorithm may be MD5, SHA (Secure Hash Algorithm) 1, CRC32 (cyclic redundancy check 32), SHA256 and so on. The server may determine an encryption algorithm from multiple encryption algorithms to perform the consistency verification on the segment data. Correspondingly, there may further be multiple encryption rules, M segment data may be selected from all segment data to perform the consistency verification, and different encryption rules may correspond to different selection methods. For example, a segment verification value of odd-numbered digits is selected for calculation to obtain the total verification value. Specifically, segment verification values of a first segment data, a third segment data and a fifth segment data ... may be selected to perform the consistency verification. The segment verification values are arranged into the first string according to the encryption rule. Herein, there are multiple arrangement methods, for example, arranging in positive order or reverse order according to positions of the original M segment data in the first data, or in other ways. After the M segment verification values are arranged into the first string, the first string is calculated by using the determined encryption algorithm to obtain the total verification value.

In the embodiments of the present disclosure, that the server determines the encryption algorithm in the encryption policy may be as follows: after the server receives the file uploading request sent by the first terminal, the server sends back an uploading response to the first terminal; the uploading request response may include multiple encryption algorithms which are displayed by the first terminal for the user to select from. After the user performs selection, the first terminal sends a selected encryption algorithm to the server in response to the user's operation. Correspondingly, the encryption rule may also be determined by using the above method, which is not repeated herein.

In order to simplify a calculation rule, For example, M=N; the encryption rule is to arrange the N segment verification values into the first string according to positions of the N segment data in the first data.

Specifically, the encryption rule is that after respectively calculating the segment verification values for all the segment data, the N segment verification values are arranged into the first string according to the order of the N segment data of the file. The first string is further calculated to obtain the total verification value.

For example, if the first terminal divides the first data into 4 segments, 4 segment data which are respectively recorded as block 1, block 2, block 3, and block 4 are obtained. The server uses the encryption algorithm to separately calculate the 4 segment data to obtain 4 segment verification values which are etag 1, etag 2, etag 3, and etag 4. Since an order of the 4 segment data in the first data is block 1, block 2, block 3, and block 4, the 4 segment verification values are arranged in order as etag 1 etag 2 etag 3 etag 4, and the encryption algorithm is reused to calculate etag 1 etag 2 etag 3 etag 4 again to obtain the total verification value.

After the total verification value is obtained, the server associatively stores the combined first data, the segment specification, the encryption policy and the total verification value. Therefore, when there is another terminal like the second terminal that downloads the first data from the server, the second terminal may perform the consistency verification on the first data by using the total verification value in order to ensure that the first data is not tampered with.

The process of the consistency verification performed by the second terminal is as follows, including steps of: the second terminal sends a downloading request for the first data to the server; the second terminal receives the first data sent by the server, the segment specification corresponding to the first data, the encryption policy corresponding to the first data and the total verification value corresponding to the first data; the second terminal reads the first data in segments according to the segment specification to obtain N segment data; the second terminal calculates the segment data of the first data according to the encryption policy to obtain the total encryption value; the second terminal verifies the total encryption value by using the total verification value to determine whether the first data is tampered with.

In a specific implementation process, the second terminal may send a downloading request for data stored in the server, thereby obtaining requested data. Specifically, for the first data, the second terminal sends a downloading request for the first data to the server. After receiving the downloading request, the server sends the first data and the segment specification, the encryption policy, and the total verification value associatively stored with the first data to the second terminal. Specifically, the server may add the segment specification, the encryption policy and the total verification value to a file header of the first data. After the downloading of the first data is completed, the second terminal obtains the corresponding segment specification, encryption policy, and total verification value from the file header of the first data.

The second terminal reads the first data according to the segment specification to obtain N segment data, and calculates the segment data of the first data according to the encryption policy to obtain a total encryption value. The second terminal compares the total encryption value with the received total verification value. If they are the same, it is determined that the first data is not tampered with. If they are different, it is determined that the first data is tampered with.

Further, corresponding to a server side, the manner in which the second terminal performs the consistency verification on the segment data of the first data is also determined by the encryption policy. That is, the second terminal calculates the segment data of the first data according to the encryption policy to obtain a total encryption value as described above includes: the second terminal selects M segment data from the N segment data according to the encryption rule in the encryption policy, and 2≤M≤N; for any one of the M segment data, the second terminal uses the encryption algorithm in the encryption policy to calculate segment data to obtain the segment encryption value of the segment data; the second terminal arranges M segment encryption values into a second string according to the encryption rule, and calculates the second string by using the encryption algorithm to obtain the total encryption value.

Specifically, the second terminal reads the acquired first data according to the corresponding segment rule in the received encryption policy, and after reading off the size of each segment, the second terminal performs encryption calculation on the segment according to the encryption rule. An encryption calculation algorithm is a corresponding encryption algorithm in the encryption policy. Herein, the segment size of the first data made by the second terminal is consistent with the segment size received by the server, and the consistency verification method of the segment data by the second terminal is also consistent with a calculation method of the server side. Therefore, if the first data is not tampered with, the total encryption value calculated by the second terminal shall be the same as the total verification value calculated by the server. If they are different, it indicates that the first data is tampered with.

In order to simplify the calculation rule, For example, M=N; the encryption rule is to arrange the N segment verification values into a second string according to the position of the N segment data in the first data.

Specifically, after calculating the segment verification values for all the segment data, the terminal arranges the N segment verification values into the second string according to the order of the N segment data of the file. The second string is further calculated by using the encryption algorithm to obtain the total encryption value.

In addition, the same one terminal in the embodiments of the present disclosure may both download data from the server and upload data to the server. A specific data uploading process includes: the second terminal performs segment on the second data according to the segment specification to obtain M segment data; the second terminal sends the M segment data to the server.

In order to understand the present disclosure more clearly, the above process will be described in detail in specific embodiments. In the specific embodiments, both the first terminal and the second terminal are installed with a client supported by the server in the embodiment of the present disclosure. Here the first client is installed in the first terminal and the second client is installed in the second terminal. Specific steps are as follows.

In step S301, the first client sends an uploading request of the first data to the server.

In step S302, the server sends an uploading response to the first client.

In step S303, the first client sends 256 segment data of the first data to the server.

In step S304, when the server receives a first segment data that arrives, the server determines an encryption algorithm, for example, SHA 1 algorithm, according to the pre-configured rule. Herein, corresponding relationships of encryption algorithm sets configured in the server are as follows: [{01-MD5}, {02-SHA256}, {03-MD4}, {04-SHA1}, and {05-CRC32}].

In step S305, the server calculates a SHA1 value (which, for example, may be etag 1, etag 5, etag 3, etag 34, etag 25, etag 76, ..., etag 256) for each received segment data. Herein, according to the position in the first data, a first segment data corresponds to etag 1, a second segment data corresponds to etag 2 ..., and a 256th segment data corresponds to etag 256. Because completion times of the upload of different segment data are different, a calculation order of the segment data is based on an order in which the server receives the segment data.

In step S306, the server combines 256 segment data into the first data.

In step S307, the server arranges the SHA 1 value of each segment data into the first String 1 according to the order of 256 segments in the first data, and then String 1 is etag 1 etag 2 etag 3 etag 4 etag 5 etag 6 ... etag 256.

In step S308, the server obtains the total verification value by calculating the SHA 1 value of String 1, and records it as etag 0.

In step S309, the server determines that the size of the segment data is 4M, the encryption algorithm is SHA 1, and the SHA 1 value is etag 0. Then a consistency verification value corresponding to the first data is generated as 00fff-04-etag 0. Herein, OOfff is a hexadecimal representation of the size of 4M of the segment data, while 04 is a hexadecimal code of a configured encryption algorithm SHA 1. The server associatively stores the consistency verification value with the first data.

In step S310, the server receives a downloading request sent by the second client.

In step S311, the server sends the first data to the second client, here a file header of the first data including the consistency verification value.

In step S312, the second client obtains the consistency verification value 00fff-04-etag 0 from the file header of the first data, and resolves that a size of the segment data OOfff is correspondingly 4M, and the encryption algorithm 04 corresponds to SHA 1 and the total verification value is etag 0.

In step S313, the second client reads the first data, and each time after reading off a segment data of 4M , the second client calculates a SHA 1 value for the segment data to obtain etag 1', etag 2', etag 3', etag 4' ... etag 256'. All SHA 1 values are arranged according to positions of the segment data to obtain a second String 2, so the String 2 is etag 1' etag 2' etag 3' etag 4' ... etag 256'. The second client calculates a SHA 1 value of String 2 to obtain the total encryption value which is recorded as etag 0'.

In step S314, the second client compares etag 0' with etag 0. If the two values are consistent, it is determined that the first data is not tampered with. If the two values are different, it indicates that the first data is tampered with.

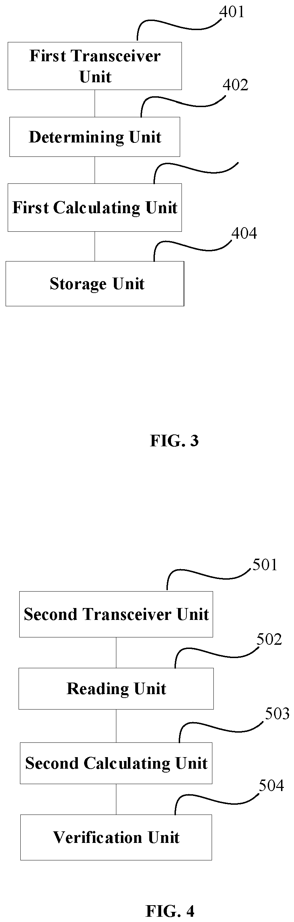

Some embodiments of the present disclosure also provide a data uploading and downloading server, as shown in FIG. 3, including: a first transceiver unit 401, configured to receive N segment data of a first data sent by a first terminal; here the N segment data are obtained by the first terminal segment the first data according to a segment specification, and N≥2; a determining unit 402, configured to determine an encryption policy corresponding to the first data; a first calculating unit 403, configured to calculate the segment data of the first data according to the encryption policy to obtain a total verification value; a storage unit 404, configured to associatively store the first data formed after the N segment data are combined, the segment specification, the encryption policy, and the total verification value. The first transceiver unit 401 is further configured to send the first data, the segment specification, the encryption policy, and the total verification value to the second terminal after receiving a downloading request for the first data sent by the second terminal.

The first calculating unit 403 is specifically configured to: select M segment data from the N segment data according to an encryption rule in the encryption policy, and 2≤M≤N; calculate any segment data in the M segment data by using an encryption algorithm in the encryption policy with respect to the segment data to obtain a segment verification value of the segment data; arrange M segment verification values into a first string according to the encryption rule, and calculate the first string by using the encryption algorithm to obtain the total verification value.

In an embodiment of the present disclosure, M=N; the encryption rule is to arrange N segment verification values into the first string according to a position of the N segment data in the first data.

In an embodiment of the present disclosure, the determining unit 402 is specifically configured to receive the encryption policy sent by the first terminal, here the encryption policy is such an encryption policy as selected by the first terminal from a plurality of pre-stored encryption policies and as corresponding to the first data.

In an embodiment of the present disclosure, the determining unit 402 is specifically configured to determine the encryption policy corresponding to the first data based on a preset rule and according to the number of segment data and/or a size of each segment data.

Some embodiments of the present disclosure also provide a data uploading and downloading terminal, as shown in FIG. 4, including: a second transceiver unit 501, configured to send a downloading request for a first data to a server; here the second transceiver unit 501, further configured to receive the first data sent by the server, the segment specification corresponding to the first data, an encryption policy corresponding to the first data, and the total verification value corresponding to the first data; a reading unit 502, configured to read the first data in segments according to the segment specification to obtain N segment data; a second calculating unit 503, configured to calculate fragmented segment data of the first data according to the encryption policy to obtain a total encryption value; and a verification unit 504, configured to verify the total encryption value by using the total verification value to determine whether the first data is tampered with.

In an embodiment of the present disclosure, the second calculating unit 503 is specifically configured to: select M segment data from the N segment data according to an encryption rule in the encryption policy, and 2≤M≤N; calculate any one of segment data in the M segment data by using an encryption algorithm in the encryption policy with respect to the segment data to obtain a segment encryption value of the segment data; arrange M segment encryption values into a second string according to the encryption rule, and calculate the second string by using the encryption algorithm to obtain the total encryption value.

In an embodiment of the present disclosure, M=N; the encryption rule is to arrange N segment encryption values into the second string according to a position of the N segment data in the first data.

In an embodiment of the present disclosure, the second transceiver unit 501 is further configured to: perform segment on a second data according to the segment specification to obtain M segment data; and send the M segment data to the server.

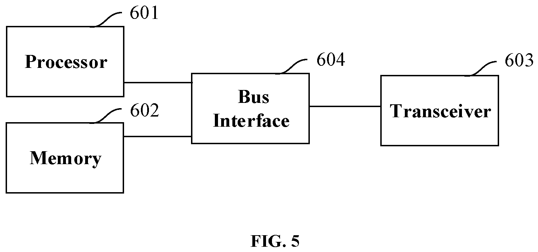

Based on the same principle, some embodiments of the present disclosure further provide an electronic device, as shown in FIG. 5, including: a processor 601, a memory 602, a transceiver 603, and a bus interface 604. Herein, the processor 601 and the memory 602 are connected with the transceiver 603 through the bus interface 604. The processor 601 is configured to read a program in the memory 602 and execute the following methods: receiving N segment data of a first data sent by a first terminal; the N segment data are obtained by the first terminal segment the first data according to a segment specification, and N≥2; determining an encryption policy corresponding to the first data; calculating the segment data of the first data according to the encryption policy to obtain a total verification value; associatively storing the first data formed after the N segment data are combined, the segment specification, the encryption policy, and the total verification value; sending the first data, the segment specification, the encryption policy, and the total verification value to the second terminal after receiving a downloading request for the first data sent by the second terminal.

The processor 601 is further configured to: select M segment data from the N segment data according to an encryption rule in the encryption policy, and 2≤M≤N; calculate segment data in the M segment data by using an encryption algorithm in the encryption policy with respect to the segment data to obtain a segment verification value of the segment data; arrange the M segment verification values into a first string according to the encryption rule, and calculate the first string by using the encryption algorithm to obtain the total verification value.

The processor 601 is further configured to: receive the encryption policy sent by the first terminal, here the encryption policy is such an encryption policy as selected by the first terminal from a plurality of pre-stored encryption policies and as corresponding to the first data.

The processor 601 is further configured to: determine the encryption policy corresponding to the first data based on a preset rule and according to the number of segment data and/or a size of each segment data.

This application is described with reference to the flowcharts and/or block diagrams of methods, devices (systems) and computer program products according to the embodiments of the present disclosure. It shall be understood that each process and/or block in the flowcharts and/or block diagrams, and combinations of processes and/or blocks in the flowcharts and/or block diagrams may be implemented by computer program instructions. These computer program instructions may be provided to a processor of a general-purpose computer, special-purpose computer, embedded processor, or other programmable data processing device to generate a machine, so that the instructions executed by the processor of the computer or other programmable data processing device generate an apparatus that is used to implement the functions specified in one or more of the processes in flowcharts and/or one or more blocks of the block diagrams.

These computer program instructions may further be stored in a computer-readable memory capable of directing a computer or other programmable data processing devices to work in a particular manner so that the instructions stored in the computer-readable memory generate a manufactured article including the instruction device. The instruction device implements the functions specified in one or more of the processes in the flowcharts and/or one or more blocks of the block diagrams.

These computer program instructions may further be loaded on a computer or other programmable data processing devices, so that a series of operation steps are performed on the computer or other programmable devices to generate a computer-implemented process. And thus the instructions executed on the computer or other programmable devices provide steps for implementing the functions specified in one or more of the processes in the flowcharts and/or one or more blocks of the block diagrams.

Although some preferred embodiments of the present disclosure are described, those skilled in the art can make additional changes and modifications to these embodiments once they know basic inventive concepts. Therefore, the appending claims are intended to be construed to include the preferred embodiments and all changes and modifications that fall within the scope of this application.

Obviously, those skilled in the art may make various changes and modifications to the present disclosure without departing from the spirit and scope of the disclosure. In this way, if these modifications and variations of this application fall within the scope of the claims of this application and their equivalent technologies, the present disclosure is also intended to include these modifications and variations.

## Claims

1. A data consistency verification method, comprising:
receiving, by a server, N segment data of a first data sent by a terminal; wherein the N segment data are obtained by the terminal segmenting the first data according to a segment specification, and N≥2;
determining, by the server, an encryption policy corresponding to the first data;
calculating, by the server, the segment data of the first data according to the encryption policy to obtain a total verification value;
storing associatively, by the server, the first data formed by combining the N segment data, the segment specification, the encryption policy, and the total verification value; and
responsing, by the server, the first data, the segment specification, the encryption policy, and the total verification value after receiving a downloading request for the first data.

2. The method according to claim 1, wherein calculating, by the server, the segment data of the first data according to the encryption policy to obtain a total verification value comprises:
selecting, by the server, M segment data from the N segment data according to an encryption rule in the encryption policy, and 2≤M≤N;
calculating, by the server, with respect to any segment data in the M segment data, the segment data by using an encryption algorithm in the encryption policy to obtain a segment verification value of the segment data; and
arranging, by the server, M segment verification values into a first string according to the encryption rule, and calculating the first string by using the encryption algorithm to obtain the total verification value.

3. The method according to claim 2, wherein M=N; and
the encryption rule is to arrange N segment verification values into the first string according to a position of the N segment data in the first data.

4. The method according to any one of claims 1 to 3, wherein determining, by the server, an encryption policy corresponding to the first data comprises:
receiving, by the server, the encryption policy sent by the terminal, wherein the encryption policy is that the terminal selects an encryption policy corresponding to the first data from a plurality of pre-stored encryption policies.

5. The method according to any one of claims 1 to 3, wherein determining, by the server, an encryption policy corresponding to the first data comprises:
determining, by the server, the encryption policy corresponding to the first data based on a preset rule and according to the number of segment data and/or a size of each segment data.

6. A data consistency verification method, comprising:
sending, by a terminal, a downloading request for a first data to a server;
receiving, by the terminal, the first data, a segment specification corresponding to the first data, an encryption policy corresponding to the first data, and a total verification value corresponding to the first data sent by the server;
reading, by the terminal, the first data in segments according to the segment specification to obtain N segment data;
calculating, by the terminal, a segment data of the first data according to the encryption policy to obtain a total encryption value; and
verifying, by the terminal, the total encryption value by using the total verification value to determine whether the first data is tampered with.

7. The method according to claim 6, wherein calculating, by the terminal, a segment data of the first data according to the encryption policy to obtain a total encryption value comprises:
selecting, by the terminal, M segment data from the N segment data according to an encryption rule in the encryption policy, and 2≤M≤N;
calculating, by the terminal, with respect to any segment data in the M segment data, the segment data by using an encryption algorithm in the encryption policy to obtain a segment encryption value of the segment data; and
arranging, by the terminal, M segment encryption values into a second string according to the encryption rule, and calculating the second string by using the encryption algorithm to obtain the total encryption value.

8. The method according to claim 7, wherein M=N;
the encryption rule is to arrange N segment encryption values into the second string according to a position of the N segment data in the first data.

9. The method according to any one of claims 6 to 8, further comprising:
performing, by the terminal, segment on a second data according to the segment specification to obtain M segment data; and
sending, by the terminal, the M segment data to the server.

10. A data uploading and downloading server, comprising:
a first transceiver unit, configured to receive N segment data of a first data sent by a terminal; wherein the N segment data are obtained by the terminal segment the first data according to a segment specification, and N≥2;
a determining unit, configured to determine an encryption policy corresponding to the first data;
a first calculating unit, configured to calculate the segment data of the first data according to the encryption policy to obtain a total verification value;
a storage unit, configured to associatively store the first data formed after the N segment data are combined, the segment specification, the encryption policy, and the total verification value; and
the first transceiver unit, further configured to send the first data, the segment specification, the encryption policy, and the total verification value after receiving a downloading request for the first data.

11. A data uploading and downloading terminal, comprising:
a second transceiver unit, configured to send a downloading request for a first data to a server; and
the second transceiver unit, further configured to receive the first data sent by the server, a segment specification corresponding to the first data, an encryption policy corresponding to the first data, and a total verification value corresponding to the first data.
a reading unit, configured to read the first data in segments according to the segment specification to obtain N segment data;
a second calculating unit, configured to calculate a segment data of the first data according to the encryption policy to obtain a total encryption value; and
a verification unit, configured to verify the total encryption value by using the total verification value to determine whether the first data is tampered with.

12. An electronic device, comprising:
at least one processor; and
a memory communicatively connected with the at least one processor;
wherein the memory stores an instruction executable by the at least one processor, and the instruction is executed by the at least one processor, so that the at least one processor is able to implement the method according to any one of claims 1 to 5.

13. A non-transitory computer-readable storage medium, storing a computer instruction that is used to cause the computer to implement the method according to any one of claims 1 to 5.
